# EUROPEAN PATENT APPLICATION

(11) **EP 1 157 745 A2**
(43) Date of publication of application: **28.11.2001**
(21) Application number: 01304571.1
(22) Date of filing: 24.05.2001
(51) Int. Cl.: B05B 15/12

(54) **Recycling system of aqueous paint**

(30) Priority: 26.05.2000 JP 2000156583
(71) Applicant: Nippon Paint Co., Ltd., Osaka-shi Osaka-fu (JP)
(72) Inventor: Yamane, Tsuyoshi, Sakai-shi, Osaka-fu (JP)
(74) Representative: Perry, Robert Edward

(57) **Abstract**

The present invention provides a recycling system for a multiplicity of aqueous paints (101-106), in which the same apparatus or equipment is used when the aqueous paint belongs to the same group, thus reducing the number of required apparatuses.
In the recycling system, over-spray paints (4) are collected group by group according to a classification based on the identity of combinations of pigments contained in said aqueous paints.

## Description

### FIELD OF THE INVENTION

The present invention relates to a recycling system of aqueous paints in which plural aqueous paints having different paint colors can be used, and which contains apparatuses or equipments required for an operation between a collection of an excess paint from coating and reusing the collected paint.

### BACKGROUND OF THE INVENTION

An aqueous paint has widely been used for coating industrial products. An aqueous paint is especially noted from the point of re-use of resource without paint waste, because over-sprayed paint, i.e. aqueous paint that does not adhere with an article to be coated during coating is collected with water, filtered and concentrated, followed by re-using it as paint. The paint also tends to be more widely used by the reasons that a filtrate of the paint is water, and that the paint is easily handled without any problem, such as air pollution, in comparison with one using organic solvent.

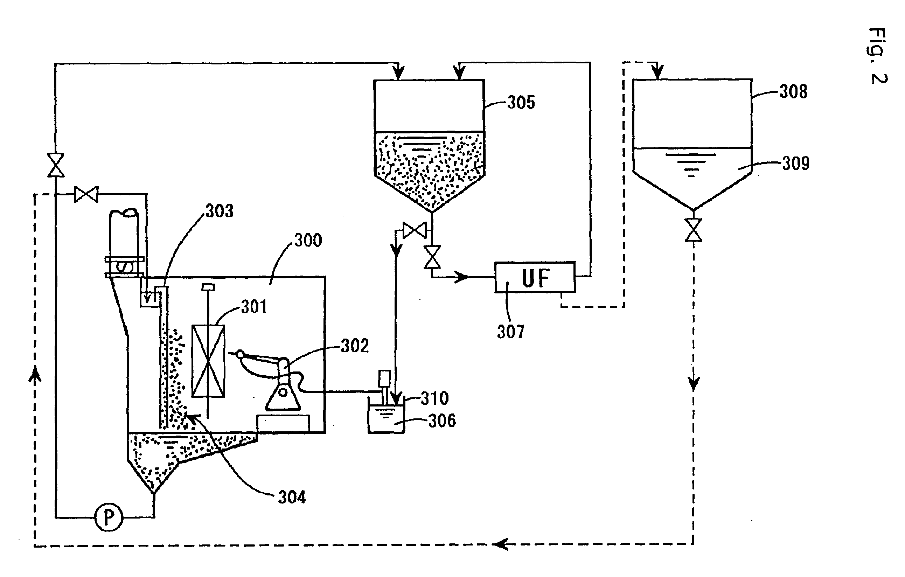

A recycling system of an aqueous paint currently used is shown in Figure 2. In Figure 2, an article to be coated 301 is coated with an aqueous paint sprayed from a coating-gun 302 in a water-curtain-type coating booth 300. Over-sprayed paint 304 is collected by water-curtain 303, and sent as diluted paint to a concentration tank 305. The paint in the concentration tank 305 is filtered by a filtration equipment, usually ultrafiltration equipment 307, to separate it into a concentrated paint and a filtrate. The concentrated paint is then returned to the concentration tank 305 and the filtrate 309 is sent to a filtrate bath 308. When the concentrated paint 306 stored in the concentration tank 305 is used, it is moved to a concentrated paint tank 310, stored and re-prepared therein, followed by transferring from the concentrated paint tank 310 to the coating-gun 302 to coat. The filtrate 309 is stored in the filtrate bath 308 and, if necessary, used as the water-curtain 303 or a solution for washing.

The above recycling system of aqueous paint is designed for coating one color aqueous paint, and is not considered for changing paint color to another or using aqueous paints having different paint color in the same recycling system. In the case where two or more different color paints are used, it is considered that the same recycling systems as shown in Figure 2 are required in number equal to number of paint colors, but this is unrealistic because a space for equipments increases.

In order to change aqueous paints having different paint colors in the same recycling system, an aqueous paint which has been coated has to be completely removed from the recycling system and sufficiently washed, after which another aqueous paint having different paint color is applied thereto. However, a large amount of waste solution is created by washing.

It is also required that the aqueous paint that has previously been coated is collected by the recycling system and concentrated to temporarily store as a concentrated paint. If number of paint color of aqueous paints used in a recycling system increases, spaces for storing the concentrated paints are required corresponding to the number of paint color, which does not comply with the present situation in which an aqueous paint is more widely used.

### OBJECT OF THE INVENTION

The present invention provides systems and processes solving the problems mentioned above, in which, when two or more aqueous paints having different paint colors are coated using one recycling system for single aqueous paint, the aqueous paints are classified into some groups and are collected, separated and concentrated based each group, so as to decrease number of equipments and the like required for the operations.

### SUMMARY OF THE INVENTION

That is, the present invention provides with a recycling system of an aqueous paint comprising;
coating an aqueous paint having a paint color that is toned with two or more original color aqueous paints in a water-curtain-type coating booth, collecting an over-spray paint that does not adhere with an article to be coated in a booth circulation water bath,
separating and concentrating the over-spray paint by ultrafiltration equipment to store as a concentrated paint in a concentration bath, and
taking out the concentrated paint when it is used and toning color to reuse, wherein, when two or more aqueous paint having different paint colors are coated in the recycling system, the over-spray paints are collected group by group according to a classification based on identity of combinations of pigments contained in the aqueous paints, separated and concentrated to store, so as to provide with smaller number of booth circulation water baths, ultrafiltration equipments, concentration baths and filtration baths than paint colors of aqueous paints.

In the recycling system of the present invention, the concentrated paint can be toned using a computer-color-matching equipment to reuse.

The present invention also provides with a process for reusing an aqueous paint comprising;
coating an aqueous paint having a paint color that is toned with two or more original color aqueous paints in a water-curtain-type coating booth, collecting an over-spray paint that does not adhere with an article to be coated in a booth circulation water bath,
separating and concentrating the over-spray paint by ultrafiltration equipment to store as a concentrated paint in a concentration bath, and
taking out the concentrated paint when it is used and toning color to reuse, wherein, when two or more aqueous paints having different paint colors are coated in the recycling system, the over-spray paints are collected group by group according to a classification based on identity of combinations of pigments contained in the aqueous paints, separated and concentrated to store.

### BRIEF DESCRIPTION OF THE DRAWINGS

Figure 1 is a schematic view that shows a recycling system of an aqueous paint according to the present invention.

Figure 2 is a schematic view that shows a conventional recycling system of an aqueous paint.

### DETAILED DESCRIPTION OF THE INVENTION

A paint color of an aqueous paint used in the recycling system of the present invention is generally obtained by mixing original color aqueous paints to tone to a desired paint color. The representative original color aqueous paint includes, aqueous paints having six colors of, for example, white, black, green, red, yellow and blue, but the present invention is not limited to them.

Conventionally, toning has been carried out by properly mixing these original color aqueous paints from experience or by a suitable machine, but lately, it is automatically carried out by so-called Computer Color Matching System (usually abbreviated to CCM) which has recently developed.

When toning of paint is carried out by the CCM system, each original color paint is previously coated on a test piece to form a coated piece having a coating, on which a spectral reflection factor is measured. The result inputs to a CCM program and calculates to obtain data of each original color (absorption coefficient and scattering coefficient). For an aqueous paint having a desired paint color, a coated piece is similarly formed and a spectral reflection factor is measured on the surface of the coating. In the CCM system, a formulating amount of each original color paint is calculated by calculation program and error correcting program (such as error of the theory of mixing colors, error of making data of original colors, error caused by changing coloring abilities of original colors which are used and the like) based on calculated data of each original color and a spectral reflection factor of the desired paint color which is input. A formulating amount of each original color paint is then calculated by an automatic computer equipped in a CCM system respectively, and suitable amounts of original color paints are mixed to obtain an aqueous paint having a desired paint color.

The introduction of the CCM system decreases number of using an original color paint in comparison with a conventional method in which toning is carried out based on visual evaluation by a person, and also allowed to automatically measure formulating amounts, so as to reduce difference of qualities between aqueous paints which are toned.

In the present invention, it is premised that an aqueous paint is toned to a desired paint color by CCM system as mentioned above, but in some case, an aqueous paint can be toned without CCM system and toned by a conventionally known experimental method in which a desired color is visually compared with a paint color of a paint obtained by properly mixing original color aqueous paints.

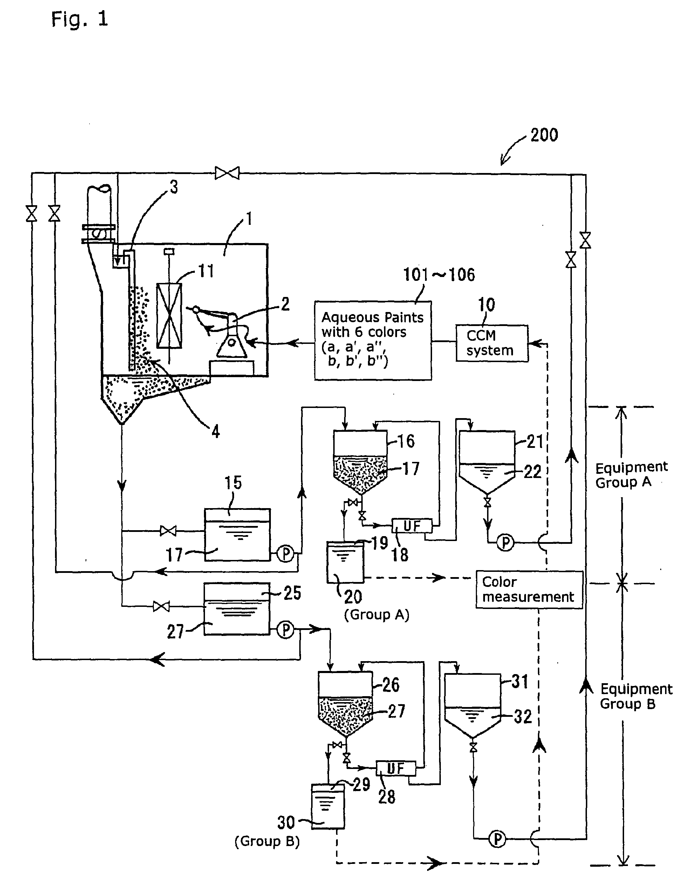

Details of the present invention will be explained with reference to Figure 1 hereinafter. Figure 1 is a schematic view that shows a specific example of the recycling system of aqueous paints according to the present invention.

The recycling system of an aqueous paint of the present invention basically is composed of 5 work areas of (1) spray coating of an aqueous paint, (2) collection, separation and concentration of an over-spray paint after coating, (3) storage of a filtrate and a concentrated paint that are separated, (4) preparation of a concentrated paint and (5) recycling of the concentrated paint that is prepared.

### (1) Spray coating of an aqueous paint

Into the recycling system of the present invention shown in Figure 1, a CCM system 10 is incorporated. An aqueous paint used in the recycling system may be prepared by automatically toning by CCM system 10 in the recycling system or may be separately prepared from the recycling system, using same original paints which are used in the CCM system 10 in the recycling system.

Now, in order to simplify the explanation of the present invention, aqueous paints of six colors are coated in the recycling system will be explained. This is mere exemplification to make the explanation easy and is not construed as limiting paint colors of aqueous paints used in the present invention to six colors.

In Figure 1, a sort of aqueous paint selected from aqueous paints 101 to 106 having six different paint colors (a, a', a", b, b' and b") is spray-coated to an article 11 to be coated by a coating gun 2 in a coating booth 1. Among the six paint colors, a, a' and a" are obtained from combinations of same original color paints, of b, b' and b" are also obtained from combinations of same original color paints, but which are different from the original color paints of the "a " group, as mentioned later.

### (2) and (3) Collection, separation, concentration and storage of paint

In the recycling system of the present invention, aqueous paints are classified into several groups based on identity of combinations of pigments contained therein, and collection, separation, concentration and storage are carried out for every group after coating. That is, two or more aqueous paints having different paint colors are classified such that the aqueous paints having the same combination of pigments contained in aqueous paints belong to the same group. In the present invention, the classification of aqueous paints depends on only the combination of pigments and does not depend on density and formulating ratio of pigments.

In the term of " same pigment", a level of sameness may be critical, but in the present invention, pigments having same Color Index No. are regarded as the same pigments. That is, what aqueous paints have the same combination of pigments contained therein means that paints have a combination of pigments having the same Color Index No., respectively. For example, when aqueous paints having three different paint colors are used as follow:
Aqueous paint A having a combination of two sorts of pigments of Color Index No.X and Color Index No.Y;
Aqueous paint B having a combination of two sorts of pigments of Color Index No.X and Color Index No.Y;
Aqueous paint C having a combination of three sorts of pigments of Color Index No.X, Color Index No.Y and Color Index No.Z;
the paints A and B belong to the same group and the paint C belongs to another group.

For example, Figure 1 shows that aqueous paints 101 to 106 having six different paint colors (a, a', a", b, b' and b") are spray-coated using the same coating booth 1. For example, among aqueous paints 101 to 106, when three sorts of aqueous paints 101 to 103 have paint colors of a, a', and a" which are respectively obtained by using combinations of three original color paints having white, black and yellow to tone, they belong to group A in Figure 1. When three sorts of aqueous paints 104 to 106 have paint colors of b, b', and b" which are obtained by using combinations of four original color paints having white, red, yellow and black respectively, they belong to group B in Figure 1. Thus, aqueous paints having six paint colors can be used in the recycling system to separate into two concentrated paints.

In the recycling system of the present invention, continuous operation of coating, collection and storage can be carried out using the same apparatus or equipment as long as aqueous paint to be used belongs to same group, even if it shows different color tone. For example, in Figure 1, three sorts of aqueous paints 101 to 103 having paint colors of a, a', and a" that belong to group A are used continuously, and three sorts of aqueous paints 104 to 106 having paint colors of b, b', and b" that belong to group B are also used continuously even if they have different paint color.

However, as shown in Figure 1, aqueous paints that belong to group A and group B are respectively collected, separated and concentrated to store using different apparatuses or equipments from each other, i.e. the apparatuses or equipments shown as Equipment Group A or Equipment Group B in Figure 1. Thus, as shown in, for example, Figure 1, the present invention allows a space required for apparatuses or equipments with the exception of the coating booth 1 to greatly decrease a space required for equipment groups from six to two (an area owned by Equipment Group A and Equipment Group B) even if aqueous paints having six different paint colors are used.

First, it will be explained that aqueous paints 101 to 103 that belong to Group A having paint colors of a, a' and a" are used in the recycling system in Figure 1.

In the above paragraph (2), when any paint selected in aqueous paints 101 to 103 is spray-coated in the coating booth 1, an over-spray paint 4 that does not adhere with the article 11 to be coated is collected by water curtain 3, made of booth circulation water. In the booth circulation water, a hydrophilic solvent that is generally used for aqueous paint may be contained therein in order to stably disperse the over-spray paint into water.

A solution that contains the over-spray paint 4 collected by booth circulation water is called paint diluent 17 herein.

The paint diluent 17 is collected and then stored in a booth circulation water bath 15 in Equipment Group A, followed by sending to a concentration bath 16. The paint diluent 17 in the concentration bath 16 is processed by an ultrafiltration equipment 18 several times to concentrate, thus obtaining a concentrated paint 20 in the concentration bath 16. The concentrated paint 20 is sent to a concentrated paint bath 19 to store. At the same time, a filtrate 22 filtered by the ultrafiltration equipment 18 is collected and sent to a filtrate bath 21 to store.

### (4) To (5) Preparation of a concentrated paint and reusing it

The concentrated paint 20 that is obtained from the aqueous paint belonging to Group A and is stored, is taken out from the concentrated paint bath 19 when necessary and color-toned using CCM system 10 to reuse.

Before the concentrated paint 20 is used as an aqueous paint, it is coated on a test piece, and is subjected to measurement of spectral reflection factor on the coated surface. The result of measurement of the spectral reflection factor inputs into a CCM 10, and if necessary, a formulating amount of each original color paint is re-calculated and automatically toned, so as to easily prepare an aqueous paint having a desired paint color.

In the recycling system of the present invention, the use of the CCM system 10 remarkably decreases number of use of an original color paint used for toning. When an automatic amount measuring instrument is equipped in the CCM system, the automatic measurement of amount significantly reduce difference of qualities between aqueous paints which are toned.

On the other hand, when aqueous paints 104 to 106 that belong to Group B having paint colors of b, b' and b" are used, the operation areas (3) to (5) regarding collection and reusing is carried out as generally described in aqueous paints 101 to 103 that belong to Group A, with the exception that a booth circulation water bath 25, a concentration bath 26, an ultrafiltration equipment 28, a concentrated paint bath 29 and a filtration bath 31 are used.

In the present invention, aqueous paints that belong to the same group may be used to continuously carry out operations of coating, storage and reusing without washing a coating booth even if the aqueous paints have different paint colors. However, when two or more aqueous paints belonging to different groups are used for coating and change color has to be conducted, an operation must have steps of stopping coating with an aqueous paint that has been coated, washing the coating booth with a filtrate obtained from a group which the aqueous paint belongs to and changing to an aqueous paint belonging to another group to start coating.

In the Figure 1, when the aqueous paint 101 having a paint color of "a" that belongs to group A is changed to the aqueous paint 104 having a paint color of "b" that belongs to group B, an operation must have steps of washing an inner surface of a line, a surface of inside wall of a coating booth 1, a vent placed in a backside of the coating booth 1 and the like with a filtrate 22 obtained from the aqueous paint 101 which is used just before change of paint, which is used as water curtain 3, changing to the aqueous paint 104 to start coating. The filtrate 22 used to wash the coating booth 1 when changing color may be collected and stored in a booth circulation water bath 15. The filtrate 22 can be used when the aqueous paint 101 is coated.

In the present invention, the concentrated paint 20 or 30 is temporarily stored in a concentrated paint bath 19 or 29 until an aqueous paint belonging to the same group of the concentrated paint is newly prepared or toned. This reduce distribution of spectral reflection factors of concentrated paints measured for reusing and makes it easy to automatically tone with CCM system 10.

The present invention can be effectively applied to coatings of automobile bodies, steel-made furniture, machines for industry, such as a switchboard, and parts thereof.

According to the recycling coating system of aqueous paints of the present invention, since the collection, separation, concentration and further re-preparation of aqueous paints are carried out not for every paint color of aqueous paints, but for every group into which aqueous paints are classified based on identity of combinations of pigments contained in the aqueous paint, number of booth circulation water baths, ultrafiltration equipments, concentration baths and filtration baths can be made smaller than that of paint colors of aqueous paints so as to greatly decrease a space required for the apparatuses or the equipments. According to the present invention, introduction of CCM system into the recycling system also allows to decrease an amount of original color aqueous paints used to tone at the time of reusing.

A coating booth and the like are washed with a filtrate obtained from an aqueous paint that is previously used before an aqueous paint belonging to another group is used, so as to allow efficiency of use of the same coating booth to increase, and so as to prevent resins or pigments contained in aqueous paints that have different compositions from each other to be mixed.

A collected and concentrated paint is temporally stored until an aqueous paint belonging to the same group of the concentrated paint is newly toned or re-toned, so that no variation in results of spectral reflection factor of concentrated paints measured for reusing would occur and automatic toning by CCM system could be easily made.

## Claims

1. Recycling system of an aqueous paint comprising;
coating an aqueous paint having a paint color that is toned with two or more original color aqueous paints in a water-curtain-type coating booth, collecting an over-spray paint that does not adhere with an article to be coated in a booth circulation water bath,
separating and concentrating the over-spray paint by ultrafiltration equipment to store as a concentrated paint in a concentration bath, and
taking out said concentrated paint when it is used and toning color to reuse, wherein, when two or more aqueous paints having different paint colors are coated, in the recycling system said over-spray paints are collected group by group according to a classification based on identity of combinations of pigments contained in said aqueous paints, separated and concentrated to store, so as to provide with smaller number of booth circulation water baths, ultrafiltration equipments, concentration baths and filtration baths than paint colors of aqueous paints.

2. The recycling system of an aqueous paint according to claim 1 wherein the concentrated paint is color-toned by a computer-color-matching equipment to reuse.

3. Process for reusing an aqueous paint comprising;
coating an aqueous paint having a paint color that is toned with two or more original color aqueous paints in a water-curtain-type coating booth, collecting an over-spray paint that does not adhere with an article to be coated in a booth circulation water bath,
separating and concentrating the over-spray paint by ultrafiltration equipment to store as a concentrated paint in a concentration bath, and
taking out said concentrated paint when it is used and toning color to reuse, wherein, when two or more aqueous paint having different paint colors are coated in the recycling system, said over-spray paints are collected group by group according to a classification based on identity of combinations of pigments contained in said aqueous paints, separated and concentrated to store.

4. The process for reusing an aqueous paint according to claim 3 wherein the concentrated paint is color-toned by a computer-color-matching equipment to reuse.

5. The process for reusing an aqueous paint according to claim 3 further comprising; when two or more aqueous paints which belong to different groups are changed from one color to another to coat, stopping coating an aqueous paint previously coated, washing a coating booth with a filtrate obtained from a group to which said aqueous paint belongs, and then changing to another aqueous paint which belongs to another group to start coating.

6. The process for reusing an aqueous paint according to claim 3 wherein the concentrated paint is temporarily stored in a concentrated paint bath until an aqueous paint which belongs to the same group is toned with the concentrated paint.
